Europäisches Patentamt

European Patent Office

Office européen des brevets

(11) Publication number: **0 191 447 B1**

# EUROPEAN PATENT SPECIFICATION

(45) Date of publication of patent specification: **13.05.92**  (51) Int. Cl.⁵: **G11B 5/21**, G11B 5/235, //G11B5/147

(21) Application number: **86101672.3**

(22) Date of filing: **10.02.86**

(54) **Magnetic head.**

(30) Priority: **15.02.85 JP 28639/85**
            **11.10.85 JP 227111/85**

(43) Date of publication of application:
   **20.08.86 Bulletin 86/34**

(45) Publication of the grant of the patent:
   **13.05.92 Bulletin 92/20**

(84) Designated Contracting States:
   **DE FR GB**

(56) References cited:
   **US-A- 4 368 496**

   **PATENT ABSTRACTS OF JAPAN, vol. 6, no. 41 (P-106)[919], 13th March 1982; & JP-A-56 159 819**

   **PATENT ABSTRACTS OF JAPAN, vol. 7, no. 142 (P-205)[1287], 22nd June 1983; & JP-A-58 56 220**

   **PATENT ABSTRACTS OF JAPAN, vol. 7, no. 127 (P-201)[1272], 3rd June 1983; & JP-A-58 45 617**

(73) Proprietor: **MATSUSHITA ELECTRIC INDUSTRI-AL CO., LTD.**
   **1006, Oaza Kadoma**
   **Kadoma-shi, Osaka-fu, 571(JP)**

(72) Inventor: **Satomi, Mitsuo**
   **52-4, Kisabe 6-chome**
   **Katano City 576(JP)**
   Inventor: **Hirota, Ken**
   **24-G-210, Kamishinden 1-chome**
   **Toyonaka City 565(JP)**
   Inventor: **Inoue, Osamu**
   **1-2, Matsumotodouri 7-chome**
   **Hyogo-ku Kobe City 652(JP)**

(74) Representative: **Dr. Elisabeth Jung Dr. Jürgen Schirdewahn Dipl.-Ing. Claus Gernhardt P.O. Box 40 14 68 Clemensstrasse 30 W-8000 München 40(DE)**

Note: Within nine months from the publication of the mention of the grant of the European patent, any person may give notice to the European Patent Office of opposition to the European patent granted. Notice of opposition shall be filed in a written reasoned statement. It shall not be deemed to have been filed until the opposition fee has been paid (Art. 99(1) European patent convention).

Rank Xerox (UK) Business Services
(3.08/2.19/2.0)

PATENT ABSTRACTS OF JAPAN, vol. 7, no. 262 (P-238)[1407], 22nd November 1983; & JP-A-58 143 427

PATENT ABSTRACTS OF JAPAN, vol. 8, no. 109 (P-275)[1546], 22nd May 1984; & JP-A-59 19 209

PATENT ABSTRACTS OF JAPAN, vol. 7, no. 256 (P-236)[1401], 15th November 1983; & JP-A-58 139 322

PATENT ABSTRACTS OF JAPAN, vol. 9, no. 195 (P-379)[1918], 13th August 1985; & JP-A-60 61 911 (HITACHI SEISAKUSHO K.K.) 09-04-1985

## Description

The present invention relates to a magnetic head, and particulary pertains to a magnetic head suited video-tape recorder.

## DESCRIPTION OF THE RELATED ART

Hitherto, ferrite is widly used as core material of magnetic head, because it has a high wear resistance. But, since its saturation magnetization Bs is lower than the alloy-material by 30 % - 50 %, when the ferrite is used for high density recording media, which has been put to a practical use lately, magnetic saturation of the head core causes problems. From the above point of view, a magnetic head comprising permalloy or sendust is put into practice for the high density recording media.

On the other hand, amorphous alloy draws attention as a splendid material in both, wear resistance and magnetic characteristics.

In case that those alloys are used as core material of the magnetic head, a lamination structure is generally employed in order to avoid eddy current loss in high frequency range, since the specific resistance of the core material per se is low (70 - 120 $\mu\Omega \cdot cm$).

In an audio head, the track width is comparatively large and is several hundred $\mu m$ in thickness, and further, its frequency range is lower, therefore the thickness of a core is relatively thick and is 200 - 300 $\mu m$ in thickness; in order to form a lamination, gap formation, an adhesive such as epoxy resin or the like, is used.

In case of magnetic heads for VTRs, computer memory devices and various data recorders, the track width is very small, for instance several scores $\mu m$, and further, since the gap length is very short, for instance, less than 0.3 $\mu m$, it is difficult to keep the gap length in high precision by using the adhesive.

Furthermore, in case that the track width is small and the using frequency is in a range of several MHz - 10 MHz and is comparatively high, the desirable thickness of a core is less than 10 $\mu m$.

However, it is difficult to prepare the core having such a small thickness with the present technology; and furthermore even in a structure comprising ribbon-amorphous or ribbon-sendust, it is difficult to attain a uniform thickness of core, when the thickness of the core is less than 20 $\mu m$.

From the above point of view, a method wherein thin layer of amorphous alloy or sendust alloy as a magnetic material is prepared by adopting a sputtering method or vapor deposition method.

By using these methods, a core having a thickness of less than 10 $\mu m$ is obtained easily, and since it is possible to laminate the magnetic material and the interface insulation material alternately and the adhesion strength of between each material is large, it is possible to retain the gap in the above-mentioned high precision.

In such a prior art, it is well known that $SiO_2$ is used as interface insulation material. And further, as gap spacer material, employment of the $SiO_2$ is well known.

Using such a covential magnetic head comprising a lamination magnetic core made of a metal magnetic material and $SiO_2$ as interface insulating material, a running test for conventional metal particulate tape is made in various environments. As a result, it was found that particularly in a low humidity environment, the head output was greatly lowered. By observing a tape contact surface of the head, the output of which was lowered, selective accumlation was found around the section of the $SiO_2$ as interface insulation material. As a result of the measurement by surface analyzer, the thickness of the accumlation was 50 - 60 mm (500 - 600 Å). The accumulation is analyzed by the Auger analysis method, and it was found that the component of accumulation is a magnetic material component in the metal tape, and further, for the thickness of the accumulation both data based on the surface analyzer and the Auger analysis method agrees with each other. And further, little accumulation was observed on the gap.

Collectively considering the above, it is found that when the metal praticulate tape runs in a low humidity environment, the magnetic material of the metal tape selectively accumulates around $SiO_2$ used as interface insulation material in the magnetic head comprising a thin sheet of metal magnetic material. Because of this accumulation, spacing takes place between the magnetic head and the tape, and the head output lowers on account of the spacing loss.

On the other hand, as the number of laminations increases steadily, a trend of decrease of permeability ($\mu'$) is observed, though the thickness of the magnetic material is kept the same. This is because that magnetostriction constant ($\lambda s$) has not become perfectly zero, and besides that, the thermal expansion coefficient ($\alpha$) of the magnetic material is more than ten times as large as that of $SiO_2$.

US-A-4 368 496 discloses a magnetic head the core of which is composed of thin plates of a high magnetic permeability each provided with an adhesive layer comprising a granular substance as an additive to an insulating and adhesive epoxy resin whose amount should be at least 30 %. The granular substance is an inorganic material composed of at least a member selected from metal oxides.

## OBJECT AND SUMMARY OF THE INVENTION

The present invention is intended to solve the above-mentioned problem of the prior art, and the purpose of the present invention is to obtain a magnetic head on which the magnetic material component of the tape does not accumulate, thereby to provide a stable head output.

The magnetic head of the present invention is characterized in that a tape contact surface of the magnetic head comprises a section of multi-layered structure of magnetic substance, and

at least one interface insulation material in the magnetic substance of the multi-layered structure and the gap spacer of material comprises one member selected from the group of oxide, complex oxide, nitride and carbide, of transition metal elements, IIa group elements of periodic table and Zn.

## BRIEF DESCRIPTION OF THE DRAWINGS

FIG.1 is a perspective view showing a magnetic head as an embodiment of the present invention.

FIG.2 is a plan view showing a magnetic head as an embodiment of the present invention.

FIG.3 is a sectional view taken on line III-III of FIG.2.

## DESCRIPTION OF THE PREFERRED EMBODIMENT

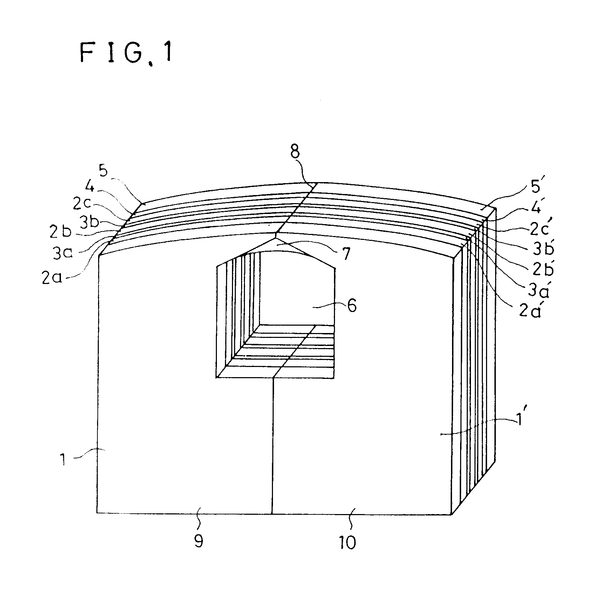

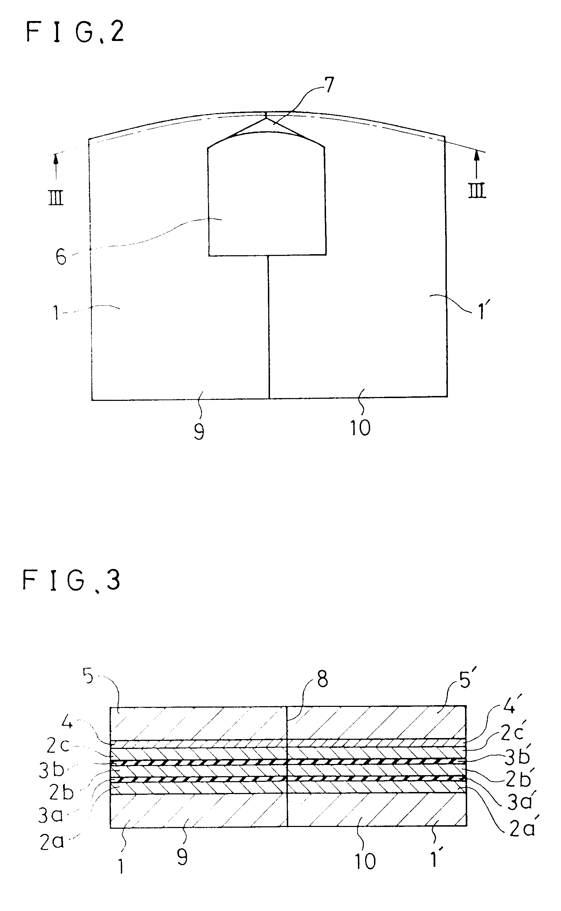

In the following, one embodiment of the present invention is elucidated with reference to FIGs.1 and 2.

The substrate material of a non-magnetic metal, such as brass, is subject to a mirror-grinding and washed sufficiently, thus to obtain a substrate 1. The substrate 1 is put into a known vacuum chamber depressed to $3 \times 10^{-7}$ Torr. After Ar gas is supplied to the vacuum chamber to a pressure of $2 \times 10^{-2}$ Torr, the amorphous alloy layer 2a on the substrate 1 is made by sputtering wherein the component of target is 81 atomic% Co, 13 atomic% Nb and 6 atomic% Zr.

Next, taking an interface insulation material as target of sputtering, a layer of the interface insulation material having a thickness of 1000 Å is disposed on the amorphous alloy layer 2a by sputtering at Ar pressure of $4 \times 10^{-2}$ Torr.

Thereafter, in a similar way to the above, the amorphous alloy layers (2b, 2c) and the interface insulation material layer 3b are sputtered alternately to form 2b, 3b and 2c, in this order on the amorphous alloy layer 2a, and thus a tripple-layered structure block is obtained.

On the other hand, the substrate 5, the material of which is the same as that of substrate 1, is adhered to the amorphous alloy layer 2c with a bonding glass layer 4 therebetween, thus laminated core is obtained.

Next, the winding aperture 6 is engraved on the gap forming face of the laminated core. And, after carrying out a mirror-grinding by using diamond paste on the gap forming surface, the gap spacer material is sputtered to that surface in a predetermined thickness, thus one-side laminated core block 9 to form the gap 8 is completed.

Another side laminated core block 10 having the same components 1' to 5' as the one-side block 9 is made in accordance with the same process as the above-mentioned.

Then the gap forming faces of the blocks 9, 10 are abutted on each other with bonding glass 7 therebetween, to form the gap 8. Then by being worked to a predetermined shape a magnetic head is thus completed.

This magnetic head is attached to a video tape recorder (the relative speed of the tape is 3.8 m/sec), and a tape running test is carried out in various environments, using general metal particulate tape. As a result of the running test, in the conventional magnetic head wherein $SiO_2$ is used as interface insulation material or gap spacer material, a considerable drop of the head output is observed However, in the magnetic head of the present invention a stable head output is obtained in all the environments of the test.

The outputs of the magnetic head of the present invention at a temperature of 23°C and a relative humidity of 10% obtained by the test is shown in Table 1 with the output of the conventional magnetic head as comparison sample. In Table 1, the head outputs are relative values taking the head output at a temperature of 23°C and a relative humidity of 70% as 0 (dB).

Table 1

| Interface insulation material (Target material) | Gas spacer material (Target material) | 23°C 10% Relative humidity head output (dB) |
|---|---|---|
| $SiO_2$ (Conventional material) | $SiO_2$ (Conventional material) | $-4$ |
| $\alpha\text{-}Fe_2O_3$ | " | $-0.5$ |
| $MgNiO_2$ | " | $-0.3$ |
| $MgMnO_2$ | " | $-0.5$ |
| $Mg_2TiO_4$ | " | $-0.2$ |
| $SrTiO_2$ | " | $-0.5$ |
| $NiMnO_2$ | " | $-0.5$ |
| $ZnFe_2O_4$ | " | $-0.2$ |
| $\alpha\text{-}Fe_2O_3$ | $\alpha\text{-}Fe_2O_3$ | $0$ |
| $MgNiO_2$ | $SrTiO_2$ | $0$ |
| $NiMnO_2$ | $ZnFe_2O_4$ | $0$ |
| $ZnFe_2O_4$ | $ZnFe_2O_4$ | $0$ |

Next, non-magnetic stainless steel as a substrate is put into a vacuum chamber depressured to $5 \times 10^{-7}$ Torr; after Ar gas is provided with the vacuum chamber to a pressure of $1.5 \times 10^{-3}$ Torr, sputtering is carried out to the substrate taking a sendust alloy (Fe 84.5 wt%, Si 9.7 wt% Al 5.8 wt%) as target of the sputtering. Then, taking the interface insulation material as target, sputtering is carried out to the sendust layer at Ar gas pressure of $4 \times 10^{-2}$ Torr, the interface insulation material of about 1000 Å in thickness being thus formed.

Hereinafter, in the similar way to the above the sendust alloy layer and the interface insulation material layer are laminated alternately, thus obtaining a multi-layered sendust layer.

Table 2 shows the magnetic permeability of the resultant layers at a frequency of 100 KHz with a magnetic field of 1 mOe. The magnetic permeabilities in Table 2 are the value wherein only the thickness of the magnetic material is taken into account and the interface insulation material is neglected because of its small thickness.

Table 2

| Interface insulation material | Thermal expansion coefficient $\alpha(\times 10^{-7}/°C)$ | Sendust alloy layer | | | Magnetic permeability $\mu'$ (100KHz,1mOe) |
| --- | --- | --- | --- | --- | --- |
| | | Thickness of one layer ($\mu$m) | Lamination number | Total thickness ($\mu$m) | |
| $SiO_2$ (Conventional material) | 4 | 10<br>3 | 3<br>10 | 30.3<br>30.9 | 2000<br>800 |
| $ZnFe_2O_4$ | 85 | 10<br>3 | 3<br>10 | 30.3<br>30.9 | 2500<br>2300 |
| $Mg_2TiO_4$ | 90 | 10<br>3 | 3<br>10 | 30.3<br>30.9 | 2700<br>2400 |
| $NiMnO_2$ | 115 | 10<br>3 | 3<br>10 | 30.3<br>30.9 | 3000<br>2900 |
| $SrTiO_3$ | 100 | 10<br>3 | 3<br>10 | 30.3<br>30.9 | 2800<br>2700 |
| $\alpha$-$Fe_2O_3$ | 105 | 10<br>3 | 3<br>10 | 30.3<br>30.9 | 2900<br>2800 |
| TiN | 94 | 10<br>3 | 3<br>10 | 30.3<br>30.9 | 2700<br>2500 |
| TiC | 76 | 10<br>3 | 3<br>10 | 30.3<br>30.9 | 2500<br>2200 |
| WC | 73 | 10<br>3 | 3<br>10 | 30.3<br>30.9 | 2400<br>2150 |
| ZrC | 67 | 10<br>3 | 3<br>10 | 30.3<br>30.9 | 2400<br>2050 |
| TaC | 82 | 10<br>3 | 3<br>10 | 30.3<br>30.9 | 2600<br>2300 |

In the above-mentioned embodiment, a magnetic head having a sandwich structure wherein the head core is put between the substrates is used, but, similar effects are realized in a magnetic head wherein the whole are of the tape contact surface consists of a magnetic substance of multi-layered structure material.

Further, Tables 1 and 2 show limited varieties of components of oxides, complex oxides, nitrides and carbides of transition metal elements IIa group of the periodic table and Zn. But it is not necessary that the component is limited to a ratio shown in the Tables 1 and 2. So far as the component is in a practically permissible range, the above-mentioned effect is realized, even if the materials contain some impurities or if here is some difference between the target component and the material component.

In the above-mentioned embodiment, the magnetic material is an amorphous alloy of the Co-Nb-Zr system, but other alloys, such as the Co-Fe-Si-B system and the Ni-Si-B system show similar effects. Further, the magnetic material is not restricted to the sputtering material, but the ribbon amorphous made by the melt quenching method or the thin layer made by the vapor deposition method or the like can be used as the magnetic material.

Furthermore, the component of the sendust alloy is not restricted, and is effective in the Fe-Si-Al alloy system. Therefore, permalloy (Fe-Ni alloy) as the alloy magnetic material can be expected to have the similar effect, because the magnetic permeability greatly effects on magnetostriction.

As mentioned above, in the present invention, since the material comprising oxide, complex oxide, nitride or carbide of the transition metal elements, IIa group elements of the periodic table and Zn are used as interface insulation materials or gap spacer materials of the magnetic head made of a magnetic substance having a multi-layered structure, the magnetic material component in the tape does no longer accumulate on the magnetic head by tape running under the conditions of various practical environments. Accordingly, a stable head output is obtained and a highly reliable magnetic head is realized.

By using the material of the present invention as interface insulation material, the thermal expansion coefficient of the interface insulation material is larger by digit than that of conventional material, and the interface insulation material becomes more like metal magnetic material. Thereby, in case that especially the number of lamination layers increases or the thickness of one layer becomes thin, the influence of stress to the magnetic material becomes small, and accordingly deterioration of the magnetic head characteristic becomes small.

**Claims**

1. A magnetic head characterised in that a
   tape contact surface of the magnetic head comprises a section of a multi-layered structure of magnetic substance, and
   at least one of interface insulation material (3a, 3b, 3a', 3b') in the magnetic substance of the multi-layered structure and a gap (8) spacer material consists of at least one member selected from the group of oxide, complex oxide, nitride and carbide, of transition metal elements, IIa group elements of periodic table and Zn.

2. The magnetic head in accordance with claim 1, wherein;
   the complex oxide is mainly composed of one member selected from the group of MgO-NiO, MgO-MnO, $MgO-TiO_2$, $SrO-TiO_2$, NiO-MnO and $ZnO-Fe_2O_3$.

3. The magnetic head in accordance with claim 1, wherein;
   the oxide is mainly composed of iron oxide ($\alpha-Fe_2O_3$).

4. The magnetic head in accordance with claim 1, wherein;
   the nitride is mainly composed of TiN.

5. The magnetic head in accordnce with claim 1, wherein;
   the carbide is mainly composed of one member selected from the group of Tic, WC, ZrC and TaC.

6. The magnetic head in accordance with claim 1, wherein;
   the magnetic substance is amorphous magnetic alloy.

7. The magnetic head in accordance with claim 1, wherein;
   the magnetic substance is mainly composed of Fe-Si-Al alloy.

8. The magnetic head in accordance with claim 1, wherein;

each layer (3a,3b,3a', 3b') of oxide, complex oxide nitride and carbide is formed by a sputtering method.

9. The magnetic head in accordance with claim 1, wherein;

the magnetic substance layer is formed by a sputtering method.

**Revendications**

1. Tête magnétique caractérisée en ce qu'une surface de contact de bande de la tête magnétique comprend une section d'une structure en couches multiples de substance magnétique, et

au moins l'un des matériaux isolants d'interface (3a, 3b, 3a', 3b') présent dans la substance magnétique de la structure en couches multiples et un matériau intercalaire d'entrefer (8) sont constitués d'au moins un élément choisi dans le groupe des oxyde, oxyde complexe, nitrure et carbure d'éléments métalliques de transitions, d'éléments du groupe IIa du tableau périodique et de Zn.

2. Tête magnétique selon la revendication 1, dans laquelle :

l'oxyde complexe est principalement composé d'un élément choisi dans le groupe de MgO-NiO, MgO-MnO, MgO-liO$_2$, SrO-TiO$_2$, NiO-MnO et ZnO-Fe$_2$O$_3$.

3. Tête magnétique selon la revendication 1, dans laquelle :

l'oxyde est principalement composé d'oxyde de fer ($\alpha$-Fe$_2$O$_3$).

4. Tête magnétique selon la revendication 1, dans laquelle :

le nitrure est principalement composé de TiN.

5. Tête magnétique selon la revendication 1, dans laquelle :

le carbure est principalement composé d'un élément choisi dans le groupe de TiC, WC, ZrC et TaC.

6. Tête magnétique selon la revendication 1, dans laquelle :

la substance magnétique est un alliage magnétique amorphe.

7. Tête magnétique selon la revendication 1, dans laquelle :

la substance magnétique est principalement composée d'un alliage Fe-Si-Al.

8. Tête magnétique selon la revendication 1, dans laquelle :

chaque couche (3a, 3b, 3a', 3b') d'oxyde, d'oxyde complexe, de nitrure et de carbure est formée par un procédé de pulvérisation.

9. Tête magnétique selon la revendication 1, dans laquelle :

la couche de substance magnétique est formée par un procédé de pulvérisation.

**Patentansprüche**

1. Magnetkopf, dadurch gekennzeichnet, daß

eine Bandberührungsfläche des Magnetkopfes einen Abschnitt aus einem mehrlagigen Gebilde aus magnetischer Substanz aufweist, und

wenigstens ein Grenzflächenisoliermaterial (3a,3b,3a',3b') in der magnetischen Substanz des mehrlagigen Gebildes und ein Spaltabstandsmaterial (8) aus wenigstens einem Element oder Material besteht, welches ausgewählt ist aus der Gruppe, die Oxid, Komplexoxid, Nitrid und Carbid, Übergangsmetallelemente, Elemente der Gruppe IIa des Periodischen Systems und Zn umfaßt.

2. Magnetkopf nach Anspruch 1, wobei

das Komplexoxid hauptsächlich aus einem Material besteht, welches aus der Gruppe ausgewählt ist, die MgO-NiO, MgO-MnO, MgO-TiO$_2$, SrO-TiO$_2$, NiO-MnO und ZnO-Fe$_2$O$_3$ umfaßt.

9

**3.** Magnetkopf nach Anspruch 1, wobei
das Oxid hauptsächlich aus Eisenoxid ($\alpha$-Fe$_2$O$_3$) besteht.

**4.** Magnetkopf nach Anspruch 1, wobei
das Nitrid hauptsächlich aus TiN besteht.

**5.** Magnetkopf nach Anspruch 1, wobei
das Carbid hauptsächlich aus einem Material besteht, welches aus der Gruppe ausgewählt ist, die TiC, WC, ZrC und TaC umfaßt.

**6.** Magnetkopf nach Anspruch 1, wobei
die magnetische Substanz eine amorphe magnetische Legierung ist.

**7.** Magnetkopf nach Anspruch 1, wobei
die magnetische Substanz hauptsächlich aus einer Fe-Si-Al-Legierung besteht.

**8.** Magnetkopf nach Anspruch 1, wobei
jede Lage (3a,3b,3a',3b') aus Oxid, Komplexoxid, Nitrid und Carbid durch ein Aufdampfverfahren oder Aufstäubungsverfahren gebildet ist.

**9.** Magnetkopf nach Anspruch 1, wobei
die Lage aus der magnetischen Substanz durch ein Aufdampfverfahren oder Aufstäubungsverfahren gebildet ist.

F I G , 1

FIG.2

FIG.3